# NEUE EUROPÄISCHE PATENTSCHRIFT

(11) **EP 1 680 372 B2**
(45) Veröffentlichungstag und Bekanntmachung des Hinweises auf die Entscheidung über den Einspruch: **07.06.2023**
(45) Hinweis auf die Patenterteilung: 19.08.2015
(21) Anmeldenummer: 04765795.2
(22) Anmeldetag: 04.10.2004
(51) Int. Cl.: C03C 13/00, E06B 5/16

(54) **FEUERSCHUTZTÜRE UND FEUERSCHUTZEINLAGE HIERFÜR**
FIRE-PROOF DOOR AND FIRE-PROOF INSERT THEREFOR
PORTE COUPE-FEU ET ELEMENT RAPPORTE DE PROTECTION CONTRE LE FEU POUR LADITE PORTE

(30) Priorität: 06.10.2003 EP 03022609; 07.01.2004 FR 0400084
(43) Veröffentlichungstag der Anmeldung: 19.07.2006
(73) Patentinhaber: SAINT-GOBAIN ISOVER, 92400 Courbevoie (FR)
(72) Erfinder: KELLER, Horst, 69259 Wilhelmsfeld (DE); BEYER, Ralph, 19326 Weisin (DE); BERNARD, Jean-Luc, F-60600 Giancourt Breuil Le Vert (FR); AMANNT, Gerald, 1010 Lausanne (CH)
(74) Vertreter: Bockhorni & Brüntjen Partnerschaft Patentanwälte mbB
(86) Internationale Anmeldenummer: PCT/EP2004/011062
(87) Internationale Veröffentlichungsnummer: WO 2005/035459

(56) Entgegenhaltungen:
- EP-A- 0 525 816
- US-A- 5 962 354
- US-B1- 6 284 684

## Beschreibung

Die Erfindung betrifft eine Feuerschutztüre mit den Merkmalen des Oberbegriffs des Anspruchs 1 sowie eine Feuerschutzeinlage hierfür nach dem Oberbegriff des Anspruches 11.

Die Brandschutzanforderungen von Brandschutzelementen sind gemäß DIN 4102, Teil 5 in Feuerwiderstandsklassen klassifiziert. Diese Feuerwiderstandsklassen gelten auch für Feuerschutztüren. Die Feuerwiderstandsfälzigkeit einer Feuerschutztüre wird hierbei durch die Zeitdauer bestimmt, bei der bei einem bestimnten Temperaturanstieg an einer Seite der Feuerschutztüre die andere "kalte" Seite der Feuerschutztüre unter einer definierten Grenztemperatur bleibt. Die Zeitdauer in Minuten bis zum Erreichen der Grenztemperatur auf der kalten Seite wird als Standzeit bezeichnet. Diese bestimmt die Einstufung in die verschiedenen Feuerwiderstandklassen. So bedeutet eine Einstufung einer Feuerschutztüre in die Feuerwiderstandsklasse T30 eine mindestens 30-minütige Standzeit bzw. T60 und T90 eine 60-minütige und 90-minütige Standzeit. Während dieser Standzeiten muß sichergestellt sein, dass die raumabschließende Wirkung der Feuerschutztüre gewährleistet ist, d.h. es darf während dieser Zeiten keine Flamme auf der dem Feuer abgewandten Seite aus der Türe austreten, die aus dem Verbrennen der mit einer Feuerschutzeinlage eingetragenen Brandlast, sprich organisches Bindemittel, resultiert.

Infolge der Brandschutzanfbrderungen, die an Feuerschutztüren gestellt sind, wird als Mineralwolle-Dämmmaterial für die Einlage von Feuerschutztüren überwiegend Steinwolle aufgrund seiner hohen Temperaturbeständigkeit verwendet, deren Schmelzpunkt nach DIN 4102, Teil 17 bei 1.000 °C liegen soll. Derartige Steinwolle wird üblicherweise im sogenannten Düsenblasverfahren oder mit externer Zentrifugierung, beispielsweise dem sogenannten Kaskaden-Schleuderverfahren, hergestellt. Die dabei entstehenden Fasern weisen in der Regel je nach Anwendung einen mittleren geometrischen Durchmesser größer 4 bis 12 µm auf, so dass diese Fasern im Vergleich zu Fasern von herkömmlicher Glaswolle relativ grob sind. Glaswollfasern besitzen dagegen in der Regel je nach Anwendung einen mittleren geometrischen Durchmesser im Bereich von 3 µm bis 6 µm. Bei Steinwolle fällt jedoch aufgrund der Herstellung im Düsenblasverfahren oder mit externer Zentrifugierung zwangsweise ein erheblicher Anteil an unzerfasertern Material in Form von gröberen Faserbestandteilen an, das in Form sogenannter "Perlen" mit einer Partikelgröße von mindestens 50 µm im Dämmaterial vorliegt und zwar üblicherweise zu einem Anteil von 10 bis 30 % des Faseranteils des Dämmelements. Dieser vergleichsweise hohe Perlenanteil nimmt zwar am Gewicht des Dämmelements teil, trägt jedoch nichts zur gewünschten Dämmwirkung des Dämmelements bei.

Als Bindemittel wird für Steinwollefasern in der Regel ein Phenol-Formaldehydharz verwendet, welches als organisches Material, als sogenannte Brandlast in die Feuerschutztüre eingebracht wird. Der Gehalt an Bindemittel, welcher für die Strukturstabilisierung des weichen Vlieses aus Steinwolle zur Bildung einer festen Platte aus gebundener Steinwolle erforderlich ist, liegt üblicherweise bei Feuerschützeinlagen etwa kleiner 1 Gew.-% (trocken, bezogen auf die Fasermasse). Aufgrund der vergleichsweise zu herkömmlicher Glaswolle groben Faserstruktur herkömmlicher Steinwolle sind zur Bildung von Feuerschutzeinlagen hohe Rohdichten erforderlich, um die gewünschte Dämmwirkung zu erreichen. Die Rohdichte derartiger Steinwolle-Einlagen beträgt hierbei je nach Feuenwiderstandsklasse zum Beispiel von 120 kg/m³ bis 230 kg/m³.

Derart hohe Rohdichten, die zur Erzielung des gewünschten Dämmeffektes erforderlich sind, führen bei gegebener Dicke von Feuerschutzeinlagen für Feuerschutztüren unmittelbar zu hohen Türgewichten. Ferner hat eine hohe Dichte auch zwangsläufig zur Folge, dass - absolut betrachtet - eine relativ große Bindemittelmenge und damit Brandlast in die Feuerschutztüre eingebracht wird.

Da die Wännedämmwirkung der Steinwolle-Einlage bei vorgegebener Dicke alleine oftmals nicht ausreicht, um eine geforderte Feueuwiderstandsklasse zu erreichen, müssen häufig zusätzliche Brandschutzmittel vorgesehen werden, die im Brandfalle infolge des damit verbundenen Temperaturanstiegs physikalisch und/oder chemisch gebundenes Wasser abgeben und somit den Temperaturanstieg verlangsamen. Derartige Brandschutzmittel können in einzelnen Lagen eingebracht werden, wie dies aus der EP 0 741 003 bekannt ist, oder aber im Steinwollematerial selbst integriert sein, wie dies etwa aus der EP 1 097 807 bekannt ist.

Die hohen Rohdichten der für Feuerschutzeinlagen verwendeten herkömmlichen Steinwolle-Materialien führen nicht nur zu entsprechend hohen Gewichten der Einlagen und damit auch der Feuerschutztüre, sondern führen weiterhin dazu, dass die Einlagen aufgrund ihrer flächenmäßigen Größe bei ihrer Handhabung etwa im Zuge des Einbringens in die Feuerschutztüre unter ihrem Eigengewicht hohen Biegebelastungen ausgesetzt sind und dazu neigen, beim Anheben zu delaminieren oder gar Risse zu bilden. Deswegen ist eine sehr sorgfältige Handhabung dieser Feuerschutzeinlagen erforderlich, was sich ungünstig in Bezug auf eine rationelle Fertigung auswirkt. Diese mechanische Instabilität der Einlage hat zur Folge, dass der Vorgang des Einbringens der Einlage in den Türkasten bei vielen Feuerschutztüren-Herstellern der einzige Vorgang ist, der noch nicht automatisiert werden konnte.

Produkte mit hoher Rohdichte werden durch eine entsprechende Verdichtung des die jeweiligen Produkte bildenden Vlieses hergestellt. Dabei wird das Vlies vor und während des Durchlaufs durch den Aushärteofen mittels der auf dieses einwirkenden Druckkräfte zur Einstellung einer vorgegebenen Form komprimiert, wobei nach Wegfall der Druckkräfte das ausgehärtete Bindemittel die Formgebung übernimmt. Dabei wirken im Material der Steinwolle ganz erhebliche Rückstellkräfte, die durch die Wirkung des Bindemittels kompensiert werden müssen. Diese Kräfte sind um so höher, je stärker das Material komprimiert wurde, d.h. je höher die Rohdichte ist.

Im Zuge der Alterung des Steinwollematerials nach Einbau der Feuerschutztür können sich jedoch die Bindungskräfte des Bindemittels mit der Zeit abbauen. Dadurch werden die gewissermaßen "eingefrorenen" Rückstellkräfte frei, und die Steinwolle-Einlage kann ausbauchen. Die dabei auftretenden Kräfte können so groß werden, dass sie die Stahlblechschalen der Feuerschutztüre erheblich verformen, so dass die Türe ersetzt werden muss.

Um die Rückstellkräfte etwas besser beherrschen zu können, ist in der Praxis so vorgegangen worden, dass vor dem Aushärteofen eine Druckwalze das unausgehärtete Steinwollematerial lokal unter Druck setzt, und dabei Fasern bricht, d.h. gewalkt wird. Dadurch werden die Rückstellkräfte zwar verringert, was jedoch zur Folge hat, dass der Faserverbund nicht unwesentlich geschädigt werden kann. Auch leidet dadurch die Festigkeit der Einlage, was sich ungünstig bei ihrer Handhabung auswirken kann.

Das Brechen von Fasern mittels der Presswalze kann überdies zu einer erheblichen Staubentwicklung führen, so dass Staub und Faserteilchen wie auch Perlen während des Einlegens der Feuerschutzeinlage in den Türkasten diesen verschmutzen können. Diese Verschmutzung kann bei nachfolgenden Schweißvorgängen zum Schließen des Türkastens mit dem Türdeckel zu Fehlstellen bei den Schweißverbindungen führen, so dass aufwendige Qualitätskontrollen und ggf. Nachbearbeitungen erforderlich sind.

Aus der US 5,962,354 ist bereits ein Faserdämmmaterial bekannt, dessen Zusammensetzung so ausgebildet ist, dass die Fasern durch innere Zentrifugierung hergestellt werden können, wobei Faserdurchmesser von 4,5 µm für Steinwolle erreicht werden. Schließlich ist es in Zusammenhang mit einer Steinwollezusammensetzung bekannt (US 6,284,684 B1) Mineralfasern herzustellen, welche in einem physiologischen Milieu löslich sind.

Aufgabe der Erfindung ist es, eine Feuerschutztüre gemäß dem Oberbegriff des Anspruchs 1 zu schaffen, welche die Nachteile derartiger Feuerschutztüren auf der Basis herkömmlicher Steinwolle behebt und gewichtsmäßig vergleichsweise leicht ausgebildet ist, wobei die Feuerschutzeinlage insbesondere um mindestens 25 % in ihrem Gewicht reduziert werden soll, ohne dass die Anforderungen an die Brand- und Betriebssicherheit darunter leiden.

Insbesondere soll trotz angestrebter Gewichtsreduzierung die mechanische Stabilität der Feuerschutzeinlagen derart eingestellt sein, um einerseits die Handhabung zu erleichtern und andererseits den Aufbau von Rückstellkräften in Folge alterungsbedingter Verringerung der Bindungskräfte des Bindemittels und damit die Tendenz zum Ausbauchen der Feuerschutztüre zu vermeiden.

Diese Aufgabe wird erfindungsgemäß durch die Merkmale des kennzeichnenden Teils des Anspruches 1 gelöst, wobei zweckmäßige Weiterbildungen der Erfindung durch die Merkmale der Unteransprüche gekennzeichnet sind.

Die erfindungsgemäße Feuerschutztüre zeichnet sich durch eine Feuerschutzeinlage aus mindestens einem Dämmelement aus, bei dem durch das abgestimmte Zusammenwirken mehrerer Faktoren eine für die Maßgabe einer Feuerschutztüre besonders geeignete Faserstruktur definiert und zugleich eine höhe Temperaturbeständigkeit gewährleistet wird. Das erfindungsgemäße Dämmelement weist eine sehr feine Faserstruktur auf, die sich daraus ergibt, dass die Fasern des Dämmelements auf einen mittleren geometrischen Faserdurchmesser ≤4 µm ausgelegt sind. Zugleich liegt die Rohdichte im Bereich von 60 bis 130 kg/m³ und der Anteil des Bindemittels bezogen auf die Masse des Faseranteils des Dämmelements beträgt 1 bis 3 Gew.-%, wobei die Rohdichte bei einer Feuerwiderstandsklasse T30 oder dergl. bei 60 bis 80 kg/m³, vorzugsweise 70 kg/m³, bei einer Feuerwiderstandsklasse T60 oder dergl. bei 80 bis 110 kg/m³, vorzugsweise 100 kg/m³, und bei einer Feuerwiderstandsklasse T90 oder dergl. bei 110 bis 130 kg/m³, vorzugsweise 120 kg/m³, was zu entsprechenden, aufgabengemäßen Gewichtsverminderungen der Feuerschutzeinlagen zu bereits mehr als 30 % führt. Dies sind Rohdichtebereiche, die für Feuerschutzeinlagen aus herkömmlicher Steinwolle unerreichbar sind. Mit Blickpunkt auf die Temperaturbeständigkeit ist es dabei möglich, dass das Dämmelement einen Schmelzpunkt nach DIN 4102, Teil 17 von ≥1.000 °C aufweist. Durch die fein ausgelegte Mineralfaser mit einem mittleren geometrischen Faserdurchmesser ≤4 µm ergibt sich eine Faserstruktur, bei der bei gleicher Rohdichte wie bei herkömmlichen Steinwollefasern wesentlich mehr Fasern in der Struktur vorhanden sind und damit auch mehr Kreuzungspunkte für den Faserverbund. Bei gleichem Bindemitteleintrag wie bei herkömmlicher Steinwolle reduziert sich aufgrund der größeren Anzahl von Kreuzungspunkten und der Konzentration des Bindemittels an diesen Punkten der nicht zu einer Bindung beitragende Anteil des Bindemittels wesentlich, wodurch ein Faserverbund resultiert, der zu einer vergleichsweise steiferen Auslegung einer ausgehärteten Mineralfaserplatte führt. Aus der geringen Rohdichte von 60 bis 130 kg/m³ ergibt sich somit für die erfindungs gemäße Feuerschutzeinlage bei gleicher Dicke wie herkömmlich unmittelbar eine geringere Fasermasse. Damit kann bei gleichbleibender absoluter organischer Brandlast, d.h. Bindemitteleintrag, dementsprechend ein größerer relativer Bindemittelanteil eingestellt werden, was zur Folge hat, dass die Platte vergleichsweise wesentlich steifer wird. Andererseits kann bei der erfindungsgemäßen Dämmplatte eine vorgegebene Steifigkeit und Stabilität auch mit einem vergleichsweise geringerem absoluten Bindemitteleintrag erreicht werden, wodurch wiederum die durch das zumeist organische Bindemittel eingetragene Brandlast entsprechend reduziert wird. Zugleich erhöht sich in Folge der feinausgelegten Faserstruktur der für die Dämmwirkung wesentliche Luftanteil innerhalb des Dämmelements, was zu einer entsprechenden Erhöhung des Dämmeffekts führt.

Als Folge der Einstellung des Alkali/Erdalkali-Massenverhältnisses auf einen Wert < 1 resultiert eine relativ hohe Temperaturbeständigkeit zur Einhaltung der Anforderungen der normativen Feuerwiderstandsklassen oder dergl. der Mineralfasern des erfindungsgemäßen Dämmelement.

Durch die synergistisch zusammenwirkenden erfindungsgemäßen Maßnahmen ergibt sich somit eine Feuerschutztüre, die sich in Folge der verminderten Rohdichte der Feuerschutzeinlage durch ein geringeres Gewicht bei ausgezeichneten Dämmeigenschaften mit mindestens vergleichbarer Steifigkeit und hoher Temperaturbeständigkeit auszeichnet. Im Prinzip schafft die Erfindung eine Symbiose zwischen Glaswolle und Steinwolle und kombiniert somit geschickt deren vorteilhafte Eigenschaften, in dem das Dämmelement auf eine glaswollartige Faserstruktur ausgelegt ist, jedoch die Vorteile der hohen Temperaturbeständigkeit herkömmlicher Steinwolle aufweist. In Folge der größeren Faserfeinheit kann somit eine bestimmte Dämmwirkung bei gleicher Geometrie mit erheblich geringerer Rohdichte als mit herkömmlicher Steinwolle erzielt werden, was somit zu entsprechenden Materialeinsparungen gegenüber herkömmlichen Feuerschutzeinlagen führt.

Zudem kann bei der Herstellung der Dämmelement für die Feuerschutztüre mit erheblich geringerer Kompression gearbeitet werden, so dass auch geringere Rückstellkräfte "eingefroren" werden müssen. Kommt es alterungsbedingt zu einem allmählichen Abbau der Bindungskräfte des Bindemittels, so werden im erfindungsgemäßen Faserverbund allenfalls geringe Kräfte freigesetzt, so dass ein Ausbauchen der Feuerschutztüre verhindert und dadurch die Lebensdauer der Feuerschutztüre gegenüber herkömmlichen Feuerschutztüren wesentlich verlängert werden kann.

In Folge der verbesserten Stabilität in Verbund mit der geringeren Rohdichte und dem geringeren Gewicht erleichtert sich auch die Handhabung des Dämmelements zum Zwecke des Zusammenbaus der Feuerschutztüre, da ein Delaminieren, Aufreißen oder gar Abbrechen beim Anheben der Feuerschutzeinlage nicht mehr zu befürchten ist. Speziell der Prozeßschritt des Einlegens einer solchen Feuerschutzeinlage in den Türkasten wird damit auch der Automatisierung zugänglich.

Bei halbierter Rohdichte bedeutet ein gleicher relativer Bindemittelgehalt auch die Halbierung des absoluten Bindemitteleintrags, so dass erfindungsgemäß auch weit weniger Brandlast in die Feuerschutztüre eingetragen wird und damit ein wesentlicher Beitrag zur Erzielung hoher Feuerwiderstandsklassen geleistet wird. Deswegen können erfindungsgemäß Feuerschutzeinlagen mit einem größeren relativen Bindemittelanteil hergestellt werden, da in Folge der feinen Faserstruktur in Verbund mit der geringeren Rohdichte relativ mehr Bindemittel für den Faserverbund zur Verfügung steht bei gleichzeitiger Unterschreitung des absoluten Bindemittelgehaltes der herkömmlichen Steinwolleeinlage und damit die Feuerschutzeinlage mit absolut geringerem Bindemittelanteil entsprechend steif eingestellt werden kann. Mit anderen Worten: Mit der erfindungsgemäßen Feuerschutzeinlage ist es vorteilhaft möglich, ein Produkt zu schaffen, das bei optimierten mechanischen Eigenschaften einen geringeren absoluten Bindemitteleintrag im Vergleich zu herkömmlichen Produkten aufweist. Hierbei eignet sich als Bindemittel ein organisches Bindemittel und liegt der bevorzugte Bereich des Anteils des Bindemittels bezogen auf die Fasermasse des Dämmelements im Bereich von 1 bis 2 Gew.-%.

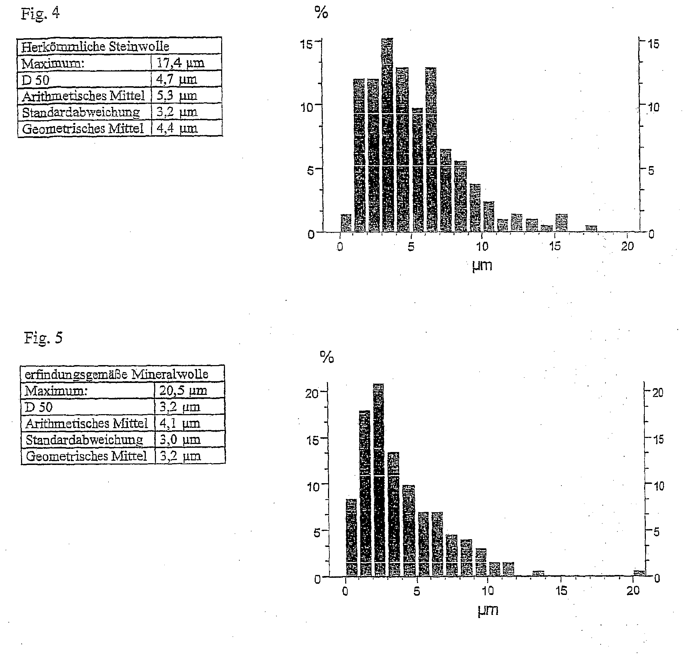

Der für die Faserfeinheit verantwortliche mittlere geometrischen Durchmesser bestimmt sich aus der Häufigkeitsverteilung des Durchmessers der Fasern. Die Häufigkeitsventeilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 4 und 5).

In besonders geeigneter Weise werden die Mineralfasern des Dämmelements durch eine innere Zentrifugierung im Schleuderkorb-Verfahren mit einer Temperatur am Schleuderkorb von mindestens 1.100 °C hergestellt. Dadurch lassen sich in einfacher Weise Fasern mit entsprechend geringem mittleren geometrische Durchmesser herstellen, wobei die damit erzielte Mineralwolle praktisch perlenfrei ist, das heißt der Anteil an Perlen im Mineralwollematerial < 1 % beträgt, was einen weiteren wesentlichen Vorteil gegenüber herkömmlicher Steinwolle mit sich bringt. Faserbruch und damit einhergehende Staubentwicklung sind damit bestmöglich vermieden, so dass sich die erfindungsgemäßen Feuerschutzeinlagen problemlos und störungsfrei in die Türkästen einlegen lassen. Das Verfahren der inneren Zentrifugierung im Schleuderkorb-Verfahren ist für Mineralfasern bereits bekannt, wozu ausdrücklich auf die EP 0 551 476, die EP 0 583 792, die WO 94/04468 und die US 6,284,684 wegen weiterer Einzelheiten verwiesen wird.

Die Rückstellkräfte gemessen als Druckspannung bei 10% Stauchung nach DIN EN 826 des in die Feuerschutztüre eingebauten Dämmelements betragen bei einer Feuerwiderstandsklasse T30 oder dergl. < 4 kPa, bei einer Feuerwiderstandsklasse T60 oder dergl. < 6 kPa und bei einer Feuerwiderstandsklasse T90 oder dergl. < 8 kPa. Diese geringen Rückstellkäfte tragen, wie oben bereits ausgeführt, zur Verlängerung der Lebensdauer und Vermeidung von Mängeln durch Ausbauchen der Feuerschutztüren bei.

Im erfindungsgemäßen Zusammenhang können im übrigen auch die bekannten Zusatzmaßnahmen verwendet werden, wie die Integration von Brandschutzmitteln in der Art von unter Hitze wasserabspaltenden Materialien, wie Metallhydroxide, wobei insbesondere Aluminiumhydroxid verwendet wird. Hierbei ist es zweckmäßig, dass diese im Dämmelement integrierten Brandschutzmittel in mindestens einer diskreten Schicht zwischen den Mineralfasern des Dämmelementes angeordnet sind. Diese diskrete Schicht ist hierbei zweckmäßiger Weise eben ausgebildet und parallel zur Hauptoberfläche der in der Regel als Platte vorliegenden Dämmelements angeordnet. Alternativ ist es aber auch möglich, dass die Verteilung des wasserabspaltenden Brandschutzmittels innerhalb der diskreten Schichten streifen und/oder punktförmig erfolgt. Es ist aber auch möglich, dass der wasserabspaltende Stoff homogen im Dämmelement verteilt wird.

Vorteilhaft sind die Feuerschutzeinlagen aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Feuerschutzeinlagen bei Herstellung, Verarbeitung, Nutzung und Entsorgung gewährleistet ist. Soweit auf Normen oder Prüfvorschriften Bezug genommen wird, gilt jeweils die für den Anmeldetag gültige Fassung.

Nachfolgend ist in einer Tabelle 1 die bevorzugte Zusammensetzung der Mineralfasern einer erfindungsgemäßen Feuerschutzeinlage bereichsweise in Gew.-% angegeben.

**Tabelle 1**

| | | | |
|---|---|---|---|
| SiO₂ | 39 - 55 % | vorzugsweise | 39 - 52 % |
| Al₂O₃ | 16 - 27 % | vorzugsweise | 16 - 26 % |
| CaO | 6 - 20 % | vorzugsweise | 8 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

Ein bevorzugter engerer Bereich von SiO₂ beträgt 39-44 %, insbesondere 40-43 %. Ein bevorzugter engerer Bereich für CaO beträgt 9,5 bis 20 %, insbesondere 10 bis 18 %.

Die erfindungsgemäße Zusammensetzung zeichnet sich insbesondere durch die Kombination aus, dass ein hoher Al₂O₃ Gehalt zwischen 16 und 27 %, vorzugsweise größer als 17 % und/oder vorzugsweise geringer als 25 % bei einer Summe der netzwerkbildenden Elemente SiO₂ und Al₂O₃ von zwischen 57 und 75 % beträgt, vorzugsweise größer als 60 % und/oder vorzugsweise geringer als 72 %, mit einem Anteil der Summe aus Na₂O und K₂O, der relativ hoch ist, jedoch in einem Bereich von 10-14,7 %, vorzugsweise 10-13,5 % liegt, bei einem Magnesiumoxidanteil in einem Anteil von wenigsten 1 %.

Diese Zusammensetzungen zeichnen sich durch ein beträchtlich verbessertes Verhalten bei sehr hohen Temperaturen aus.

In Bezug auf Al₂O₃ beträgt ein engerer bevorzugter Bereich 17 bis 25,5 %, insbesondere 20 bis 25 % und zwar vorzugsweise 21 bis 24,5 %, insbesondere etwa 22-23 oder 24 Gew.-%.

Gute feuerfeste Eigenschaften werden insbesondere bei Einstellung des Magnesiumoxidgehalts auf mindestens 1,5 %, insbesondere 2 % und zwar vorzugsweise 2 bis 5 % und dabei besonders bevorzugt ≥2,5 % oder 3 %. Ein hoher Magnesiumoxidanteil wirkt sich positiv gegen ein Absenken der Viskosität aus und wirkt sich deswegen günstig gegen ein Sinten des Materials aus.

Insbesondere ist bevorzugt, dass dann, wenn der Anteil von Al₂O₃ ≥22 % beträgt, der Anteil an Magnesiumoxid vorzugsweise wenigstens 1 %, insbesondere bevorzugt 1 bis 4 % beträgt, wobei ein weiterer bevorzugter Bereich von Magnesiumoxid 1 bis 2 % und zwar insbesondere 1,2 bis 1,6 % beträgt. Der Anteil an Aluminiumoxid ist vorzugsweise auf 25 % begrenzt, um eine ausreichend geringe Liquidustemperatur zu erhalten. Liegt der Aluminiumoxidanteil in einem Bereich von etwa 17 bis 22 %, beträgt der Anteil an Magnesiumoxid vorzugsweise wenigstens 2 %, insbesondere etwa 2 bis 5 %.

Eine Feuerschutzeinlage mit den oben definierten Merkmalen stellt ein selbständig handelbares Bauteil dar, welches in der Regel vom Mineralfaserhersteller den Feuerschutztür-Herstellern zugeliefert wird. Diese zeichnet sich eben durch die vorbeschriebenen Vorteile mit Blickpunkt auf erhöhte Stabilität, Dämmwirkung und Brandschutzverhalten wie verringertem Gewicht aus.

Nachfolgend werden bevorzugte Ausfuhrungsformen der Erfindung anhand der Zeichnung beschreiben. Darin zeigt
- Fig. 1: eine im Schnitt dargestellte erfindungsgemäße Feuerschutztüre mit erfindungsgemäßer Feuerschutzeinlage sowie
- Fig. 2: eine abgewandelte Ausführungsform einer Feuerschutzeinlage mit zusätzlich integriertem Brandschutzmittel,
- Fig. 3: ein Diagramm eines Vergleichsversuchs im Rahmen einer Wärmeleitfähig-keitsprüfung bei 400°C,
- Fig. 4: ein typisches Faserhistogramm einer herkömmlichen Steinwolle, und
- Fig. 5: ein typisches Faserhistogramm der erfindungsgemäßen Mineralwolle.

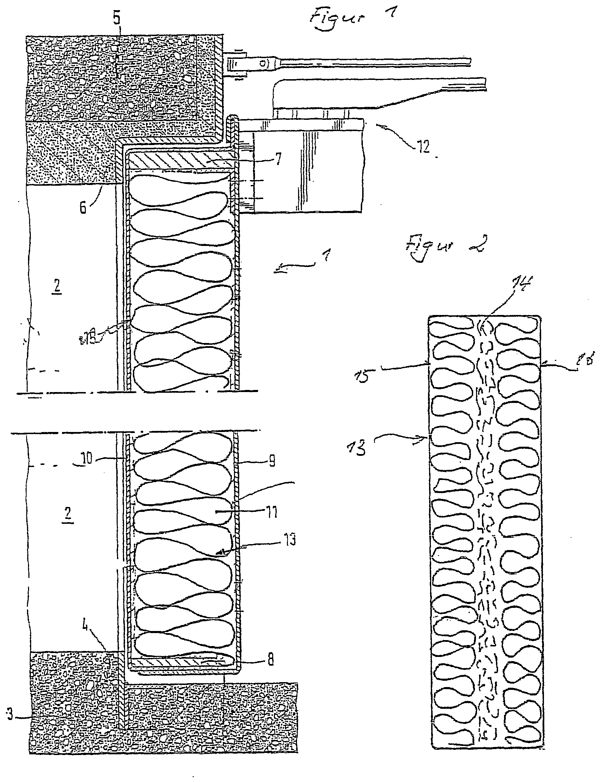

Die in Fig. 1 allgemein mit 1 bezeichnete Feuerschutztüre sitzt in einer Türöffnung des Mauerwerks eines brandgeschützten Raumes 2 mit einem Boden 3 mit unterem Anschlag 4 und einer Decke 5 mit oberem Anschlag 6. Das Rahmenwerk der Feuerschutztüre 1 ist oben bei 7 und unten bei 8 teilweise erkennbar. Ferner sind zwei Stahlblechschalen 9 und 10 vorhanden. Im Inneren des durch die Stahlblechschale 9 und 10 umschlossenen Raumes 11 ist eine erfindungsgemäße Feuerschutzeinlage 13 angeordnet. Bei 12 ist ein nicht den Gegenstand der Erfindung bildender Türschließer schematisch angedeutet.

Die Feuerschutzeinlage 13, die zwischen den Stahlblechschalen 9 und 10 der Feuerschutztüre 1 eingesetzt ist, besteht im Beispielsfalle aus einer Platte aus Mineralwollefasern, deren Zusammensetzung in der rechten Spalte der Tabelle 3 angegeben ist, so dass ein Alkali/Erdalkali-Massenverhältnis < 1 und eine feine Faserstruktur mit einem mittleren geometrischen Durchmesser der Fasern von 3,2 µm vorliegt. Daraus resultiert eine sehr fein ausgelegte Faserstruktur des erfindungsgemäßen Mineralwollgebildes mit einer innigen Vernet-zung in Folge der erhöhten Anzahl der Kreuzungspunkte des Faserverbunds.

Fig. 2 zeigt eine weitere Ausführungsform einer Feuerschutzeinlage 13, in welche eine Schicht 14 aus unter Wärmeeinwirkung wasserabspaltendem Stoff eingebaut bzw. integriert ist und zwar in ebener Ausrichtung parallel zu den beiden Hauptflächen 15 und 16 des als Platte ausgebildeten Dämmelements. Als wasserabspaltender Stoff ist hierbei insbesondere Aluminiumhydroxid verwendet. Die Schicht 14 kann hierbei durchgehend, jedoch wahlweise auch streifen und/oder punktförmig vorgesehen sein. Anstelle einer diskreten Schicht 14 können bei Bedarf auch mehrere diskrete Schichten oder der wasserabspaltende Stoff kann auch homogen verteilt vorgesehen sein.

In einem Versuch wurde jeweils eine in eine Feuerschutztüre eingebaute Feuerschutzeinlage aus herkömmlicher Steinwolle und eine Feuerschutzeinlage gemäß der Erfindung einer so-genannten Großbrandprüfung nach DIN 4102, Teil 5 verglichen, mit dem die Einhaltung der Feuerwiderstandsklasse T90 geprüft wurde. Bei identischen Abmessungen beider Feuerschutztüren mit dem Baurichtmaß 1000 mm x 2125 mm und einer Dicke von 65 mm, entsprechend einer Dicke der Feuerschutzeinlage von 63 mm betrug die Rohdichte der konventionellen Feuerschutzeinlage 210kg/m³ mit einem Bindemittelgehalt von 0,9 Gew.-% mit einem mittleren geometrischen Durchmesser von 4,4 µm und die der erfindungsgemäßen Feuerschutzeinlage 120 kg/m³ mit einem Bindemittelgehalt von 1,5 Gew.-% mit einem mittleren geometrischen Durchmesser von 3,2 µm.

Nach 90 Minuten Versuchsdauer wurde die maximal zulässige Temperaturerhöhung von 180 K auf der dem Brand abgewandten Seite der Feuerschutztüre an keinem nach der Norm DIN 4102, Teil 5 vorgegebenen Messpunkte überschritten. Auch wurde an keiner Stelle ein Flammenaustritt basierend auf einer Verbrennung der organische Brandlast festgestellt.

Die folgende Tabelle 2 fasst die Messwerte dieses Versuches zusammen, wobei aus der Gesamtheit der Messpunkte diejenigen wiedergegeben sind, die räumlich im oberen kritischen Bereich der Türe an den Stellen der größten Temperaturbelastung angeordnet sind.

**Tabelle 2**

| Messpunkt | erfindungsgemäße Feuerschutzeinlage | herkömmliche Feuerschutzeinlage | Differenz |
|---|---|---|---|
| 6 | 144K | 179K | 35K |
| 12 | 142K | 170K | 28K |
| 13 | 133K | 170K | 37K |
| 14 | 133K | 146K | 13K |
| 15 | 133K | 159K | 26K |

Tabelle 2 zeigt somit, dass zwar beide Konstruktionen die Anforderungen für eine Einstufung in die Feuerwiderstandsklasse T90 erfüllen, wobei dies jedoch im Falle der mit einer erfindungsgemäßen Feuerschutzeinlage versehenen Feuerschutztür mit einem sogar über 40 % leichteren Bauteil im Vergleich zu einer Feuerschutzeinlage aus herkömmlicher Steinwolle erreicht wird.

Wie sich aus den in Tabelle 2 angegebenen Temperaturdifferenzen ferner ergibt, weist die Feuerschutztüre mit der erfindungsgemäßen Feuerschutzeinlage einen deutlich besseren Feuerwiderstand auf, so dass insbesondere noch weiteres Potential zur Gewichtsreduzierung und Materialeinsparung im Vergleich zur konventionellen Feuerschutzeinlage vorhanden ist.

Entsprechende Vergleichsversuche wurden auch für die Überprüfung der Feuerwiderstandsklasse T30 und T60 durchgeführt, so dass also die Messung nach 30 Minuten bzw. 60 Minuten erfolgte. Die einschlägige Norm DIN 4102 Teil 5 gibt hierbei einen Belegungsplan vor bezüglich der Lage der einzelnen Messpunlcte MW. Dabei müssen für einen erfolgreichen Versuch zwei Kriterien bestanden werden. Das erste Kriterium besteht darin, dass die Messpunkte MW 1-5 im Durchschnitt ≤140K sein müssen. Das weitere Kriterium besteht darin, dass sämtliche Einzelwerte, also bei Messpunkten MW 1-17, diese jeweils ≤180 K sein müssen. Dies gilt sowohl für die T30, T60, wie auch die vorbeschriebene T90-Prüfung. Wiederum im Vergleich gestellt wurde ein erfindungsgemäßes IM-Dämmelement (IM bedeutet erfindungsgemäße Mineralwolle) mit einem Dämmelement aus herkömmlicher Steinwolle, hier Type Sillan40. Die Ergebnisse sind hierbei in Tabelle 3 dargestellt, wobei für die Messpunkte MW 1-5 jeweils der Durchschnittswert in Kelvin angegeben ist und noch die Einzelwerte der Messpunkte MW 16 und 17 aufgeführt sind, gleichfalls in Kelvin. Die Messpunkte MW 6 bis 15 sind in den Tabellen nicht enthalten, jedoch wurden diesbezüglich auch die Kriterien erfüllt.

Das IM-Dämmelement in diesen Versuchen hat eine weitaus geringere Rohdichte als die herkömmliche Steinwolle. So betrug die Rohdichte des IM-Dämmelements für T30 nur 83 kg/m³, wohingegen die Rohdichte der herkömmlichen Steinwolle Sillan40 147 kg/m³ betrug. Für T60 betrug die Rohdichte des IM-Dämmelements 120 kg/m³, hingegen von Sillan40 294 kg/m³. Das heißt, die Feuerschutzeinlage mit dem erfindungsgemäßen Dämmelement erfüllt die Prüfbedingungen bei weitaus geringeren Rohdichten als das Dämmelement aus herkömmlicher Steinwolle (Type Sillan40).

**Tabelle 3**

| T30 Messwerte nach 30 min | | | T60 Messwerte nach 60 min | | |
|---|---|---|---|---|---|
| Messpunkte | IM | Sillan40 | Messpunkte | IM | Sillan40 |
| MW 1-5 | 63,8 | 94 | MW 1-5 | 133 | 105 |
| 16 | 94,1 | 165 | 16 | 165 | 158 |
| 17 | 84 | 160 | 17 | 174 | 168 |
| Rohdichte IM 83 kg/m³ Rohdichte IM 120 kg/m³ | | | | | |
| Rohdichte Sillan40 147 kg/m³ Rohdichte Sillan40 294 kg/m³ | | | | | |

In einem zweiten Versuch wurde eine Feuerschutzeinlage gemäß der Erfindung Brandversuchen unterzogen, nämlich sogenannten Kleinbrandversuchen nach DIN 18089-1, die als Korrelationsprüfungen auf den Ergebnissen von Großbrandprüfungen basieren, und das Ergebnis des Kleinbrandversuchs mit dem Ergebnis einer Kleinbrandprüfung für eine zugelassene Feuerschutzeinlage aus herkömmlicher Steinwolle verglichen, wobei die Einhaltung der Feuerwiderstandsklasse T30 untersucht wurde.

Bei gleichen identischen Außenmaßen von 500 mm x 500 mm und einer Dicke von 52 mm beträgt die Rohdichte der Feuerschutzeinlage aus herkömmlicher Steinwolle 140 kg/m³ mit einem mittleren geometrischen Durchmesser von 4,4 µm und die der erfindungsgemäßen Feuerschutzeinlage 80 k/m³ mit einem mittleren geometrischen Durchmesser von 3,2 µm. Der Bindemittelgehalt spielt bei dieser Prüfung keine Rolle, da hier durch die Versuchsanordnung lediglich der Wännedurchgang durch das Produkt als entscheidender Parameter für das Brandverhalten gemessen wird.

Als Grenzwert für die Einhaltung der Kriterien der Feuerwiderstandsklasse T30 setzt die Zulassung für die Feuerschutzeinlage aus herkömmlicher Steinwolle mit den genannten Abmessungen und Dichten fest, dass am Ende der 30-minütigen Versuchszeit kein Einzelwert der mehrfach durchgeführten Versuche eine Temperaturerhöhung von 100 K auf der dem Feuer abgewandten Seite überschreiten darf. Dieser Grenzwert leitet sich aus der maximalen Temperaturerhöhung auf der kalten Seite aus der parallel zu einer erfolgreich bestandenen Großbrandprüfung als Korrelationsprüfung durchgeführten Kleinbrandprüfung ab. Bei gleichen Außenabmessungen betrug hierbei der maximale Temperaturanstieg der erfindungsgemäßen Feuerschutzeinlage nach 30 Minuten vorteilhaft lediglich nur 62 K.

Der Vergleichstest für eine Einstufung in der Feuerwiderstandsklasse T30 zeigt, dass die erfindungsgemäße Feuerschutzeinlage die Grenzwertanforderungen an die zugelassene herkömmliche Feuerschutzeinlage mehr als erfüllt, obwohl mit der erfindungsgemäßen Feuerschutzeinlage ein um ca. 40 % leichteres Element vorlag im Vergleich zur konventionellen Feuerschutzeinlage aus herkömmlicher Steinwolle.

Die große Differenz der erfindungsgemäßen Feuerschutzeinlage von 38 K des maximalen Einzelwertes der Temperaturerhöhung auf der dem Feuer abgewandten Seite eröffnet somit Möglichkeiten für eine weitere Gewichtsreduzierung und/oder Erhöhung des relativen organischen Bindemittelanteils in dem erfindungsgemäßen Brandschutzelement.

Die jeweilige Zusammensetzung in Gew.-% der konventionellen, also aus herkömmlicher Steinwolle gebildeten Feuerschutzeinlage als auch der erfindungsgemäßen Feuerschutzeinlage ergibt sich aus Tabelle 3, wobei beide Feuerschutzeinlagen einen Schmelzpunkt von mindestens 1000°C nach DIN 4102 Teil 17 aufweisen

**Tabelle 4**

| Zusammensetzung | | |
|---|---|---|
| Material | herkömmliche Feuerschutzeinlage | erfindungsgemäße Feuerschutzeinlage |
| SiO₂ | 57,2 | 41,2 |
| Al₂O₃ | 1,7 | 23,7 |
| Fe₂O₃ | 4,1 | 5,6 |
| TiO₂ | 0,3 | 0,7 |
| CaO | 22,8 | 14,4 |
| MgO | 8,5 | 1,5 |
| Na₂O | 4,6 | 5,4 |
| K₂O | 0,8 | 5,2 |
| P₂O₅ | | 0,75 |
| MnO | | 0,6 |
| SrO | | 0,5 |
| BaO | | 0,34 |
| Total | 100 | 99,89 |

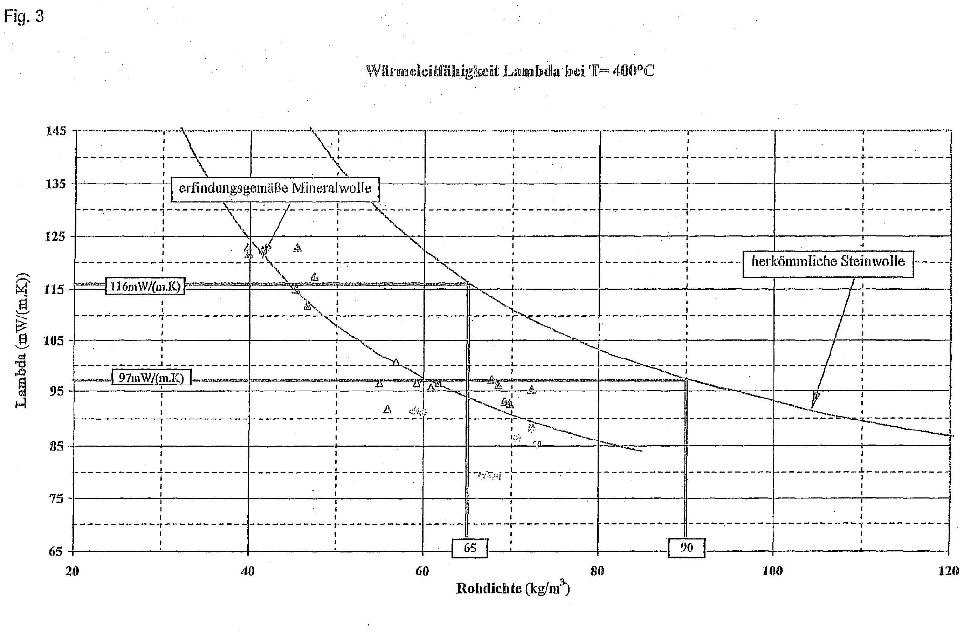

In Fig. 3 ist die Meßreihe eines Wärmeleitfähigkeitsversuches bei 400°C über der Rohdichte in Form eines Diagramms dargestellt. Die Meßergebnisse wurden nach DIN 52612-1 mit einem sogenannten Zweiplattengerät ermittelt.

Aus diesem Diagramm ist in einfacher Weise ersichtlich, welches Einsparpotential in Zusamnenhang mit Feuerschutztüren bei Verwendung der erfindungsgemäßen Mineralwolle gegenüber herkömmlicher Steinwolle möglich ist, und zwar beispielhaft für zwei Rohdichten 65 und 90 kg/m³. Die gleiche Wärmeleitfähigkeit von 116 mW/mK, welche bei herkömmlicher Steinwolle mit einer Rohdichte von 65 kg/m³ erreicht wird, wird mit der erfindungsgemäßen Mineralwolle bereits bei einer Rohdichte von etwa 45 kg/m³ erhalten, d.h. mit einer Gewichtseinsparung von ca. 31 %. Analog ergibt sich bei einer Rohdichte von 90 kg/m³ der herkömmlichen Steinwolle durch die erfindungsgemäße Mineralwolle eine Gewichtseinsparung von ca. 33 %.

Schließlich zeigt die Fig. 4 für die in der Beschreibung erwähnte herkömmliche Steinwolle ein typisches Faserhistogramm einer Feuerschutzeinlage, wobei Fig. 5 ein solches der Fasern einer erfindungsgemäßen Feuerschutzeinlage angibt.

## Patentansprüche

1. Feuerschutztüre (1), die eine normative Feuerwiderstandsklasse oder dergl. aufweist, mit einem umfangseitigen Rahmenwerk und beidseitigen Stahlblechschalen (9,10), zwischen denen eine Feuerschutzeinlage (13) mit einer Temperaturbeständigkeit zur Einhaltung der Anforderungen der normativen Feuerwiderstandsklassen oder dergl. eingesetzt ist, welche aus mindestens einem Dämmelement in Form einer durch ein Bindemittel verfestigten Platte aus in einem physiologischen Milieu löslichen Mineralfasern gebildet ist, **dadurch gekennzeichnet, dass** die Zusammensetzung der Mineralfasern des Dämmelements ein Alkali/Erdalkali-Massenverhältnis < 1 aufweist, und dass die Faserstruktur des Dämmelements bestimmt ist durch einen mittleren geometrischen Faserdurchmesser ≤ 4µm, einen Anteil des Bindemittels bezogen auf die Masse des Fasergehalts des Dämmelements im Bereich von 1 bis 3 Gew.-% und eine Rohdichte im Bereich von 60 bis 130 kg/m³, wobei die Rohdichte bei einer Feuerwiderstandsklasse T30 oder dergl. 60 bis 80 kg/m³, vorzugsweise 70 kg/m³, bei einer Feuerwiderstandsklasse T60 oder dergl. 80 bis 110 kg/m³, vorzugsweise 100 kg/m³, und bei einer Feuerwiderstandsklasse T90 oder dergl. 110 bis 130 kg/m³, vorzugsweise 120 kg/m³, beträgt, und dass die Rückstellkräfte gemessen als Druckspannung bei 10% Stauchung nach DIN EN 826 des in die Feuerschutztüre eingebauten Dämmelements bei einer FeuerWiderstandsklasse T30 oder dergl. < 4 kPa, bei einer Feuerwiderstandsklasse T60 oder dergl. < 6 kPa und bei einer Feuerwiderstandsklasse T90 oder dergl. < 8 kPa sind.

2. Feuerschutztüre nach Anspruch 1, **dadurch gekennzeichnet, dass** das Bindemittel ein organisches Bindemittel ist, wie Phenol-Formaldehydharz.

3. Feuerschutztüre nach Anspruch 1 oder 2, **dadurch gekennzeichnet, dass** der Anteil des Bindemittels bezogen auf die Fasermasse des Dämmelements im Bereich von 1 bis 2 Gew.-% liegt.

4. Feuerschutztüre nach einem der vorhergehenden Ansprüche, **dadurch gekennzeichnet, dass** das Dämmelement einen Schmelzpunkt nach DIN 4102, Teil 17 von ≥ 1.000°C aufweist.

5. Feuerschutztüre nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100°C hergestellt sind.

6. Feuerschutztüre nach einem der vorhergehenden Ansprüche, **dadurch gekennzeichnet, dass** im Dämmelement ein unter Wärmeeinwirkung wasserabspaltender Stoff, vorzugsweise Aluminiumhydroxid integriert ist.

7. Feuerschutztüre nach Anspruch 6, **dadurch gekennzeichnet, dass** der wasserabspaltende Stoff in mindestens einer diskreten Schicht integriert zwischen den Mineralfasein des Dämmelements angeordnet ist, wobei die diskrete Schicht vorzugsweise eben ausgebildet und parallel zu den beiden Hauptoberflächen des Dämmelements angeordnet ist.

8. Feuerschutztüre nach Anspruch 6, **dadurch gekennzeichnet, dass** der wasserabspaltende Stoff homogen im Dämmelement verteilt vorliegt.

9. Feuerschutztüre nach einem der vorhergehenden Ansprüche, **dadurch gekennzeichnet, dass** die Mineralfasern des Dämmelements hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen.

10. Feuerschutztüre nach Anspruch 9, **gekennzeichnet durch** folgende Bereiche der chemischen Zusammensetzung der Mineralfasern des Dämmelements in Gew.-%:
| | | | | | |
|---|---|---|---|---|---|
| SiO₂ | 39 - 55 | % | vorzugsweise | 39 - 52 | % |
| Al₂O₃ | 16 - 27 | % | vorzugsweise | 16 - 26 | % |
| CaO | 6 - 20 | % | vorzugsweise | 8 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O (Na₂O + K₂O) | 10 - 14,7 | % | vorzugsweise | 10 - 13,5 | % |
| P₂O₅ | 0 - 3 | % | insbesondere | 0 - 2 | % |
| Fe₂O₃ (Eisen gesamt) | 1,5 - 15 | % | insbesondere | 3,2 - 8 | % |
| B₂O₃ | 0 - 2 | % | vorzugsweise | 0 - 1 | % |
| TiO₂ | 0 - 2 | % | vorzugsweise | 0,4 - 1 | % |
| Sonstiges | 0 - 2,0 | % | | | |

11. Feuerschutzeinlage für eine Feuerschutztüre nach dem Oberbegriff des Anspruches 1, **gekennzeichnet durch** ein Dämmelement mit den kennzeichnenden Merkmalen wenigstens eines der Ansprüche 1 bis 10.

## Claims

1. Fire protection gate (1), featuring a normative fire resistance category or similar classification, with an encompassing structure and bilateral steel plate shells (9, 10), between which a temperature resistant fire protection inset (13) is integrated to observe demands of the normative fire resistance categories or similar classifications, formed at least from an insulating element in the form of a plate, formed of mineral fibers soluble in a physiological milieu and reinforced by a binding agent, **characterized in that** the composition of said mineral fibers of the insulating element features an alkali/earth alkali mass relation of < 1 and the fiber structure of said insulating element is determined by an average geometrical fiber diameter ≤ 4 mm, a portion of the binding agent, relative to the mass of fiber content of the insulating element in the range of 1 - to 3 weight % and a gross density in the range of 60 to 130 kg/m³, whereby the gross density at a fire resistance category T30 or similar features 60 to 80 kg/m³, preferably 70 kg/m³, at a fire resistance category T60 or similar, it features 80 to 110 kg/m³, preferably 100 kg/m³, and at a fire resistance category of T90 or similar, it features 110 to 130 kg/m³, preferably 120 kg/m³ and **in that** the resetting force, measured as pressure tension at 10% sprain according to DIN EN 826 of the insulating element, integrated in the fire protection gate, at a fire resistance category T30 or similar amounts to < 4 kPa, at a fire resistance category of T60 or similar, it amounts to < 6 kPa and at a fire resistance category of T90 or similar, it amounts to < 8 kPa.

2. Fire protection gate according to claim 1, **characterized in that** said binding agent is an organic binding agent, such as phenol-formaldehyde resin.

3. Fire protection gate according to claim 1 or 2, **characterized in that** the portion of binding agent, relative to the fiber mass of said insulating element, is within the range of 1 to 2 weight %.

4. Fire protection gate according to one of the preceding claims, **characterized in that** said insulating element features a point of fusion according to DIN 4102, Part 17, of > 1.000 °C.

5. Fire protection gate according to one of the preceding claims, **characterized in that** said mineral fibers of the insulating element are produced by internal centrifugation pursuant to the centrifuging basket procedure, with a centrifuging basket temperature of at least 1.100 °C.

6. Fire protection gate according to one of the preceding claims, **characterized in that** said insulating element features a dehydrating substance under thermal influence, preferably aluminum hydroxide.

7. Fire protection gate according to claim 6, **characterized in that** said dehydrating substance is integrated in at least a discrete layer between said mineral fibers of the insulating element, and the discrete layer is preferably plane, being aligned parallel to both main surfaces of said insulating element.

8. Fire protection gate according to claim 6, **characterized in that** said dehydrating substance is provided homogeneously in the insulating element.

9. Fire protection gate according to one of the preceding claims, **characterized in that** said mineral fibers of the insulating element, with regard to their solubility in a physiological milieu, meet the requirements of the European Guideline 97/69/EG and/or the requirements of the German Norm for Dangerous Products, Section IV, No. 22.

10. Fire protection gate according to claim 9, **characterized by** the following chemical composition ranges of the
mineral fibers of said insulating element in weight %:
| | | | | | |
|---|---|---|---|---|---|
| SiO₂ | 39 - 55 | % | preferably | 39 - 52 | % |
| Al₂O₃ | 16 - 27 | % | preferably | 16 - 26 | % |
| CaO | 6 - 20 | % | preferably | 8 - 18 | % |
| MqO | 1 - 5 | % | preferably | 1 - 4.9 | % |
| Na₂O | 0 - 15 | % | preferably | 2 - 12 | % |
| K₂O | 0 - 15 | % | preferably | 2 - 12 | % |
| R₂O (Na2O + K₂O) | 10 - 14.7 | % | preferably | 10 - 13.5 | % |
| P₂O₅ | 0 - 3 | % | especially | 0 - 2 | % |
| Fe₂O₃ (iron altogether) | 1.5 - 15 | % | especially | 3.2 - 8 | % |
| B₂O₃ | 0 - 2 | % | preferably | 0 - 1 | % |
| TiO₂ | 0 - 2 | % | preferably | 0.4 - 1 | % |
| Other | 0 - 2.0 | % | | | |

11. Fire protection inset for a fire protection gate according to the preamble of claim 1, **characterized in that** an insulating element is provided with the marking features of at least one of claims 1 to 10.

## Revendications

1. Porte coupe-feu (1) présentant une classe normative de résistance au feu ou similaire, comprenant un bâti de porte circonférentiel et des coques en tôle d'acier (9, 10) des deux côtés entre lesquelles est inséré un insert coupe-feu (13) qui a une résistance à chaud pour respecter les exigences des classes normatives de résistance au feu ou similaire et qui est constitué par au moins un élément isolant sous forme d'un panneau consolidé par un liant, en fibres minérales solubles dans un milieu physiologique, **caractérisée par le fait que** la composition des fibres minérales de l'élément isolant présente un rapport de masse alcalin/alcalino-terreux < 1 et que la structure de fibres de l'élément isolant est déterminée par un diamètre de fibre géométrique moyen ≤ 4 mm, une proportion du liant par rapport à la masse de la teneur en fibres de l'élément isolant comprise entre 1 et 3 % en poids et une masse volumique apparente comprise entre 60 et 130 kg/m³, la masse volumique apparente étant comprise entre 60 et 80 kg/m³, de préférence de 70 kg/m³, dans le cas d'une classe de résistance au feu T30 ou similaire, étant comprise entre 80 et 110 kg/m³, de préférence de 100 kg/m³, dans le cas d'une classe de résistance au feu T60 ou similaire, et étant comprise entre 110 et 130 kg/m³, de préférence de 120 kg/m³, dans le cas d'une classe de résistance au feu T90 ou similaire et **par le fait que** les forces de rappel, mesurées en tant que contrainte de compression avec un écrasement de 10 % selon DIN EN 826, de l'élément isolant installé dans la porte coupe-feu sont < 4kPa dans le cas d'une classe de résistance au feu T30 ou similaire, < 6 kPa dans le cas d'une classe de résistance au feu T60 ou similaire et < 8 kPa dans le cas d'une classe de résistance au feu T90 ou similaire

2. Porte coupe-feu selon la revendication 1, **caractérisée par le fait que** le liant est un liant organique tel que la résine phénol-formaldéhyde.

3. Porte coupe-feu selon la revendication 1 ou 2, **caractérisée par le fait que** la proportion du liant par rapport à la masse de fibres de l'élément isolant est comprise entre 1 et 2 % en poids.

4. Porte coupe-feu selon l'une quelconque des revendications précédentes, **caractérisée par le fait que** l'élément isolant présente un point de fusion selon DIN 4102, partie 17, de ≥ 1.000 °C.

5. Porte coupe-feu selon l'une quelconque des revendications précédentes, **caractérisée par le fait que** les fibres minérales de l'élément isolant sont fabriquées par une centrifugation intérieure dans le procédé à panier centrifuge, à une température d'au moins 1.100 °C sur le panier centrifuge.

6. Porte coupe-feu selon l'une quelconque des revendications précédentes, **caractérisée par le fait qu'**une substance éliminant de l'eau sous l'effet de la chaleur, de préférence de l'hydroxyde d'aluminium, est intégrée audit élément isolant.

7. Porte coupe-feu selon la revendication 6, **caractérisée par le fait que** la substance éliminant de l'eau est dispose de manière à être intégrée à au moins une couche discrète entre les fibres minérales de l'élément isolant, la couche discrète étant réalisée de préférence de façon plane et étant disposée parallèlement aux deux surfaces principals de l'élément isolant.

8. Porte coupe-feu selon la revendication 6, **caractérisée par le fait que** la substance éliminant de l'eau est présente de manière à être répartie de façon homogène dans ledit élément isolant.

9. Porte coupe-feu selon l'une quelconque des revendications précédentes, **caractérisée par le fait que** les fibres minérales de l'élément isolant répondent, quant à leur solubilité dans un milieu physiologique, aux exigences de la directive européenne 97/69/CE et/au aux exigences de la réglementation allemande sur les substances dangereuses, alinéa IV numéro 22.

10. Porte coupe-feu selon la revendication 9, **caractérisée par** les plages suivantes, en pourcentage en poids, de la composition chimique des fibres minérales de l'élément isolant:
| | | | | | |
|---|---|---|---|---|---|
| SiO₂ | 39 - 55 | % | de préférence | 39 - 52 | % |
| Al₂O₃ | 16 - 27 | % | de préférence | 16 - 26 | % |
| CaO | 6 - 20 | % | de préférence | 8 - 18 | % |
| MqO | 1 - 5 | % | de préférence | 1 - 4.9 | % |
| Na₂O | 0 - 15 | % | de préférence | 2 - 12 | % |
| K₂O | 0 - 15 | % | de préférence | 2 - 12 | % |
| R₂O (Na2O + K2O) | 10 - 14.7 | % | de préférence | 10 - 13.5 | % |
| P₂O₅ | 0 - 3 | % | en particulier | 0 - 2 | % |
| Fe₂O₃ (iron altogether) | 1.5 - 15 | % | en particulier | 3.2 - 8 | % |
| B₂O₃ | 0 - 2 | % | de préférence | 0 - 1 | % |
| TiO₂ | 0 - 2 | % | de préférence | 0.4 - 1 | % |
| Other | 0 - 2.0 | % | | | |

11. Insert coupe-feu pour une porte coupe-feu selon le préambule de la revendication 1, **caractérisé par** un élément isolant ayant les caractéristiques de l'une au moins des revendications 1 à 10
